# EUROPEAN PATENT SPECIFICATION

(11) **EP 4 501 424 B1**
(45) Date of publication and mention of the grant of the patent: **26.08.2026**
(21) Application number: 24191843.2
(22) Date of filing: 30.07.2024
(51) Int. Cl.: A63F 13/424, G10L 25/00, A63F 13/70

(54) **METHOD OF AUDIO ERROR DETECTION**
VERFAHREN ZUR AUDIOFEHLERERKENNUNG
PROCÉDÉ DE DÉTECTION D'ERREUR AUDIO

(30) Priority: 31.07.2023 GB 202311735
(43) Date of publication of application: 05.02.2025
(73) Proprietor: Sony Interactive Entertainment Europe Limited, London W1F 7LP (GB)
(72) Inventor: HUME, Oliver George, London, W1F 7LP (GB); TOLONEN, Juuso, London, W1F 7LP (GB); PANESAR, Pritpal Singh, London, W1F 7LP (GB); COSTANTINI, Giacomo, London, W1F 7LP (GB); STEMPLE, Lloyd Preston, London, W1F 7LP (GB); SCHEMBRI, Danjeli, London, W1F 7LP (GB)
(74) Representative: Gill Jennings & Every LLP

(56) References cited:
- WO-A1-2021/011888
- CN-A- 107 112 029
- KR-A- 20210 061 696
- US-A1- 2020 322 661
- US-A1- 2022 172 640

## Description

### FIELD OF THE INVENTION

The invention relates to the field of video gaming and, specifically, to error detection in video game audio.

### BACKGROUND TO THE INVENTION

In a video game development setting, error detection methods have been established to ensure that in-game graphics are accurately rendered according to criteria set by the graphics developer. These criteria may be specific to the video game and/or may include criteria relating to what the typical gamer might expect. For example, during the testing and validation phase in the development of a video game, an error detection program may be capable of detecting glitches relating to abnormal colouring of in-game objects. This program may then flag to the developer that, upon the occurrence of a particular in-game event, the colouring of a particular object appears unnatural, or otherwise incorrect or undesired.

The task of ensuring the correct colouring of objects during different in-game events can be a relatively simple one. However, until now, there has been little development of error detection programs capable of ensuring that in-game audio, when rendered, sounds natural, realistic, and free of glitches and anomalies. This can be more difficult for audio than for graphics because sounds triggered by a particular gameplay event may well occur simultaneously, that is, overlayed over each other. Such a combination of sounds can often produce erroneous audio. Further, different in-game sounds, or combinations thereof, may well sound vastly different to a player depending on the particular gameplay event occurring. For example, the sound of a dog barking, that is, the features of the audio content, will sound substantially different when rendered while the dog barks from behind a wall, while within an echoey cavern, while its mouth is muzzled, or while running past the listener.

Therefore, there is a need in video game audio development to devise methods to better detect audio errors and thereby improve how accurate and realistic in-game audio sounds to the player according to its various features.

WO 2021/011888 A1 discloses a system and method for error detection and correction in virtual reality and augmented reality environments. KR 20210061696 A discloses an inspection method for an acoustic input/output device. US 2020/322661 A1 discloses analytics in video/audio content distribution networks.

### SUMMARY OF THE INVENTION

The present invention is defined by the appended claims. In a first aspect of the invention, there is provided a computer-implemented method of detecting errors in audio outputs occurring during gameplay on a video gaming system, the method comprising: providing an audio output distribution, the audio output distribution comprising a distribution of confirmed audio outputs that are clustered according to features of the confirmed audio outputs, wherein each of the confirmed audio outputs is a combination of audio components that occur during gameplay; receiving a sample audio output that occurs during gameplay; comparing the sample audio output to the audio output distribution; and detecting an error in the sample audio output when the sample audio output is inconsistent with the audio output distribution.

When used herein, gameplay may be understood to mean the aspects of a video game relating to the plot and the overall nature of a player's interaction with the video game. Gameplay comprises a sequence of gameplay events. The gameplay events may thus refer to an instant of gameplay and are typically associated with specific in-game audio, visual and haptic components. The invention is directed to error detection in relation to the audio components therein. The audio component may comprise one or more of: a sound effect; diegetic sound; dialogue; music; non-diegetic sound; any other sound that occurs during gameplay; and the like.

The confirmed audio output is a combination of audio components that occurs during gameplay. Combination, when used herein, may be understood to mean more than one audio component which are overlayed such that they are output at least partly concurrently. The confirmed audio components may be generated based on (series of) possible combinations of audio components that could occur or could be recorded during, or otherwise isolated from, sections of gameplay in which no errors are known to have occurred. The confirmed audio output is therefore a non-erroneous audio output that may occur during the correct functioning of the video game.

Each confirmed audio output has one or more known features and may be mapped to a data point in an audio output distribution according to said features. A feature may represent any audio, acoustic, mathematical and/or statistical parameter. The audio output distribution is therefore a feature space (also known as a vector space), wherein each confirmed audio output is a data point positioned within the feature space according to the value of its features. The audio output distribution thereby comprises a distribution of more than one confirmed audio output that may be clustered according to said features. When confirmed audio outputs are clustered, that is, they have non-erroneous and substantially similar features, they may be referred to as a cluster.

In a first aspect, providing an audio output distribution comprises: using a clustering algorithm to cluster the confirmed audio outputs according to the features of the confirmed audio outputs. Any sufficient clustering algorithm known per se in the art may be used for this purpose. For example, a K-means clustering algorithm; a Gaussian mixture model; hierarchical clustering algorithm; and the like. The method may comprise using an unsupervised or self-supervised machine learning model to cluster the confirmed audio outputs. The machine learning model may learn features that can be used to cluster confirmed audio outputs. In this way, each confirmed audio output may be represented by a feature vector (or equivalently, by a representation or embedding) which encodes characteristics of the confirmed audio output, thereby allowing it to be clustered. In an alternative example, the features may not be learned by the model in a self-supervised manner but may instead be pre-defined (that is, defined by a user) features, wherein the clustering method involves determining the values of the pre-defined features, thereby clustering according to these features.

An audio output preferably comprises a section of gameplay audio comprising a plurality of audio components, where the plurality of audio components preferably comprise one or more of: a sound effect, music, dialogue. The section of gameplay audio may comprise a section of the audio output stream of a predetermined duration. For example, an audio output may comprise the audio output during a period of gameplay, where the period of gameplay may have 0.1 - 10 seconds duration. The audio output comprises all components of the audio that occur during the section of gameplay audio, where the components may comprise audio assets such as sound effects, dialogue and music output in varying combinations depending on the gameplay events occurring during the section of gameplay.

Confirmed audio outputs comprise sections of audio in which there are no errors i.e., they comprise non-erroneous combinations of audio components. The previously confirmed audio outputs are used for comparison to sample audio outputs, recorded during gameplay to determine whether the sample audio outputs differ from the confirmed audio outputs in a way that would suggest they are erroneous. A sample audio output is preferably obtained (i.e., recorded or extracted) during gameplay, i.e., during runtime. Sample audio outputs may be obtained continuously during gameplay, i.e., during a run through of the portion of the gameplay for testing. In other examples they may be obtained periodically. In these examples the sample audio outputs may be obtained automatically. In other examples, a sample audio output may be obtained in response to a user input. For example, a user may enter a command to begin recording one or more sample audio outputs. Alternatively, a user may select a sample audio output from a prerecorded audio output during a recorded gameplay for testing. The sample audio output is therefore an unconfirmed, potentially erroneous audio output that has occurred, is occurring or will occur during the potentially incorrect functioning of the video game.

Each sample audio output has one or more features which may be extracted or otherwise measured such that each sample audio output may be mapped to a data point in the audio output distribution. The features of the sample audio output which are to be extracted may correspond to the features of the audio output distribution and the clusters of confirmed audio outputs therein.

In a preferred example of the first aspect, the features of the audio outputs comprise one or more of: a volume-related feature; a frequency-related feature; a clarity-related feature; another acoustic feature; an unlabelled machine-learned feature; a deep-learned feature; and the like. In this way, the features extracted from the sample audio output are indicative of consistency or inconsistency with the clustered distribution of confirmed audio outputs.

The sample audio output may thereby be compared to the audio output distribution and the clusters of confirmed audio outputs therein. The method preferably comprises determining a measure of conformity of the sample audio output with the audio output distribution and thereby determining an error when the measure of conformity is below or above a predetermined threshold. Preferably calculating the separation comprises computing the distance between the sample audio output and the centre of the cluster in the feature space of the distribution. Preferably the measure of conformity is a separation-related metric, for example, a measure of the distance between the sample audio output and one or more clusters in the features space of the distribution. Such measures of statistical distance may include the Euclidean distance, the Chebyshev distance, the Manhattan distance, the total variation distance, the Hellinger distance, the variance, the number of standard deviations, a correlation metric, an averaging-based metric, and the like. However, the mode of comparison is not limited thereto and may be performed by any means known per se in the art. Alternatively, the measure of a conformity may be a similarity metric, for example, a cosine similarity method; a centroid similarity method; a vectoral method; a histogram analysis; a shortest path algorithm; and the like.

In a first aspect, comparing the sample audio output to the audio output distribution comprises: calculating a separation between the sample audio output and a cluster of the audio output distribution, preferably a centre of t cluster of the audio output distribution. In this way, a precise calculation of the inconsistency (that is, the magnitude of error present) in the sample audio output is made in order to ensure that only sufficiently realistic combinations of audio components are permitted in the video game upon its sale and distribution to end users (that is, players).

Preferably providing an audio output distribution comprises using a unsupervised clustering algorithm that learns features of the audio output to use to perform the clustering. In this way, the features used to cluster the confirmed audio outputs are determined by the model in the process of clustering. In this way, features are learned that best encode information in the data that may best be used to compare the audio outputs.

Upon comparison of the sample audio output with the audio output distribution, an error may thereby be detected when the sample audio output is inconsistent with the audio output distribution. Inconsistent, when used herein, may be understood to mean not consistent or conforming with any clusters of the audio output distribution. For example, the data point associated with the sample audio output falls outside of any cluster; it falls beyond a given threshold from any cluster or from the centroid of any cluster within the features space of the distribution; or it is otherwise identified, by comparison with the audio output distribution, as erroneous and/or associated with the incorrect functioning of the video game.

In a preferred example of the first aspect, detecting an error in the sample audio output comprises: determining when the separation between the sample audio output and the cluster exceeds an error threshold. The separation may be determined by any measure of distance, length, other separation-related metric, or measure of conformity known per se in the art.

In a preferred example of the first aspect, when an error is detected in the sample audio output, the method further comprises outputting an error alert. The form and whereabouts of the error alert are not limited herein and the error alert may be output in an underlying program code of the video; in a game development environment; in a notification to a game developer; in a notification to the player; or the like. In this way, erroneous audio outputs are highlighted to game developers and/or test subjects during the phases of game development and testing in order that such outputs can be ameliorated before game development is completed.

In a preferred example of the first aspect, when an error is detected in the sample audio output, the method further comprises displaying a location of the error in a visual map and/or heatmap of detected errors. For example, a visualisation of the distribution may be displayed to the user, for example in a reduced features space to allow it to be represented in reduced dimensions.

Preferably the method further comprises, when an error is detected in the sample audio output, displaying, on a display of the video gaming system, the waveform of the erroneous audio output with an erroneous portion of the waveform highlighted. In particular, the method may involve identifying components of the erroneous audio output that contribute most significantly to the separation between the erroneous audio output and a cluster of the distribution and highlighting these portions of the waveform. In this way a user can identify the audio components that are erroneous.

In a preferred example of the first aspect, when an error is detected in the sample audio output, the method further comprises recording a section of gameplay audio comprising the erroneous audio output and preferably providing an automatic recording of the erroneous audio output as it would sound in an audio mix associated with the gameplay and/or providing an audio waveform graph of the erroneous audio output. The method may also involve recording a section of gameplay, for example both audio and visual stream, containing the erroneous audio output. In this way a user can readily identify the source of the error.

In a preferred example of the first aspect, when an error is detected in the sample audio output, the method further comprises automatically deleting, suppressing, or updating the erroneous sample audio output.

In this way, detected errors are highlighted to the game developer with visual assistive tools in order to both aid the video game debugging process and aid troubleshooting after game development is completed. Preferably, updating the erroneous sample audio output comprises adjusting the features of the sample audio output so that the data point representing it is not in error with respect to the most similar (or closest) cluster. In this way, erroneous audio is more precisely mapped onto new features which ensure said audio is, in future gameplay scenarios, consistent with at least one cluster of confirmed audio outputs.

In a preferred example of the first aspect, after an error is detected in the sample audio output, the method further comprises receiving a further sample audio output that occurs during gameplay; comparing the further sample audio output to the erroneous sample audio output to determine a similarity metric; and detecting an error in the further sample audio output when the similarity metric is above a similarity metric threshold.

In a preferred example of the first aspect, when a user request is received during gameplay, the user request indicating that the sample audio output is erroneous, the method further comprises receiving a further sample audio output that occurs during gameplay; comparing the further sample audio output to the erroneous sample audio output to determine a similarity metric; and detecting an error in the further sample audio output when the similarity metric is above a similarity metric threshold. The mode of user requests is not limited herein and may be performed by any means known per se in the art. For example, by a player during gameplay; by the game developer during development; by a trained algorithm; by an artificial intelligence program; or the like.

In a preferred example of the first aspect, the method further comprises repeating the method of claim 1 to obtain a plurality of erroneous sample audio outputs, training a machine learning model using the plurality of erroneous audio output to predict whether a sample audio output is an erroneous audio output; receiving a further sample audio output and inputting the further sample audio output into the trained machine learning model to detect an error in the further sample audio output.

In the above three preferred examples, efficiency and speed in detecting and ameliorating erroneous audio is improved by the use of sample audio outputs in detecting errors in further sample audio outputs. A user experience is further improved by using user requests to implement and modify such processes.

In a preferred example of the first aspect, wherein an error is detected when the sample audio output comprises at least one erroneously repeated audio component. When such an erroneous duplication occurs, the sample audio output does not fall within the distribution of clustered confirmed audio outputs because the features of the sample audio output are inconsistent with the features of said distribution, and it is thereby detected according to the methods described herein. The preferred examples and associated features described in relation to the first aspect of the invention may equally be implemented in the following second and third aspects according to the invention.

In a second aspect of the invention, there is provided a system for detecting errors in audio outputs occurring during gameplay, wherein the system comprises a processing unit configured to perform any methods described herein.

In a third aspect of the invention, there is provided a computer program comprising instructions that, when executed, cause the computer to carry out the steps of any methods described herein.

### BRIEF DESCRIPTION OF THE DRAWINGS

Exemplary embodiments of the invention will now be described by way of example, with reference to the accompanying drawings, wherein:
Figure 1 provides an exemplary graphical diagram to illustrate an embodiment.
Figure 2 provides an exemplary graphical diagram to illustrate an embodiment.
Figure 3 provides an exemplary flow diagram according to an embodiment.

### DETAILED DESCRIPTION

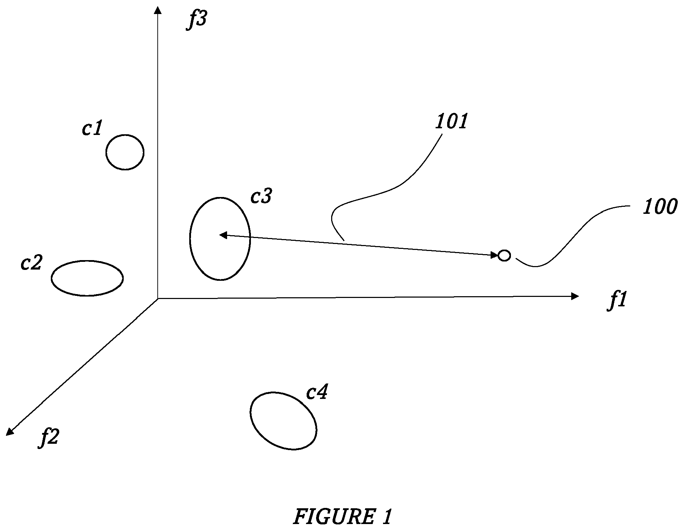

Referring to Figure 1, there is provided an audio output distribution with features f1, f2 and f3, and comprising clusters c1, c2, c3 and c4. There is also provided a sample audio output 100 and a distance 101.

By way of example, the audio output distribution is represented in a coordinate space. In the illustrated example, there are three features f1, f2 and f3 represented by three perpendicular coordinate axes in a Cartesian coordinate space. The features f1, f2 and f3 may represent any three audio, acoustic, and/or statistical parameters. However, the invention is not limited thereto as the coordinate space is a merely exemplary representation. Alternatively, there may be one feature represented on a real number line; or any natural number of features represented in an n-dimensional coordinate space, wherein n is a number of known features. The Cartesian coordinate space is therefore an exemplary coordinate space and any sufficient coordinate space known per se in the art (and whose dimensionality corresponds to the cardinality of a set of known features), for example, a polar coordinate space, may be used in the alternative.

In the illustrated example, there are four clusters c1, c2, c3 and c4. However, the invention is not limited thereto and alternatively there may be one cluster or any natural number of clusters. In the audio output distribution, confirmed audio outputs, sample audio outputs and further sample audio outputs are represented by corresponding data points. Each cluster therefore comprises data points representing confirmed audio outputs, wherein the confirmed audio outputs are non-erroneous and have substantially more similar features to each other than they do to audio outputs in other clusters.

A cluster may be provided in the audio output distribution by an appropriate clustering algorithm which groups or otherwise classifies the data points representing corresponding confirmed audio outputs according to their features, such features typically being unlabelled features which are to be determined by the clustering algorithm or otherwise. It will be appreciated that the person having ordinary skill in the art is able to identify an appropriate clustering algorithm for a particular video game and its associated characteristic audio from the many clustering algorithms known per se in the art. However, to aid understanding of this embodiment, an exemplary centroid-based clustering method is described hereon.

Accordingly, in an example of this embodiment, a centroid-based clustering algorithm (for example, a k-means, k-medians or k-medoids clustering algorithm) divides the data points representing corresponding confirmed audio outputs into the four clusters c1, c2, c3 and c4, wherein the centroid (that is, a mean, median or medoid data point respectively) of each cluster serves to characterise the corresponding cluster. To divide the data points in this example, the centroid-based clustering algorithm solves a minimisation problem, that is, the centroid-based algorithm minimises a measure of distance (for example, the mean-squared Euclidian distance) between each data point representing a corresponding confirmed audio output and the set of centroids.

It will be seen from Figure 1 that the centroid of the cluster c3 is calculated to be a distance 101 from a data point representing a corresponding sample audio output 100. An inconsistent sample audio output may be understood to mean an outlier of the clusters c1, c2, c3 and c4 which is to be detected by the methods according to this invention. To detect the sample audio output 100 to be inconsistent, the distance 101 exceeds an error threshold. It will be appreciated that the person having ordinary skill in the art is able to identify an appropriate error threshold, that is, the measure of how far the sample audio output 100 outlies the distribution of confirmed audio outputs, for a particular video game and its associated audio.

In an example of this embodiment, distances from the data point representing the corresponding sample audio output 100 are calculated to each of the plurality of clusters of the audio output distribution. The minimum distance is then used in detecting whether the sample audio output 100 is in error, that is, whether the distance from the sample audio output to the closest cluster of the plurality of clusters exceeds the error threshold. The term 'closest' may be interpreted in accordance with any appropriate measure of conformity described herein, for example a measure of distance in the feature space of the distribution. In the illustrated example, this exemplary method comprises calculating the distances from the data point representing the corresponding sample audio output 100 to each of the clusters c1, c2, c3 and c4, and therefrom determining a minimum of said distances to be to be compared to the error threshold.

In a further example of this embodiment, the sample audio output 100 comprises a combination of audio components that occurs during gameplay. As described above, the audio components may be sound effects, dialogue, music, or other audio elements output during gameplay. The sample audio output is a section of in game audio, of a predetermined duration, comprising all audio components output during that period of time. As described above, the method involves extracting audio features from this section of audio that characterise the section of audio output. A common type of audio error is the erroneous duplication of an audio component. For example, a sound effect may be output twice in quick succession, resulting in a noticeable fault in the audio. The audio features extracted are suitable to encode this type of error in the data point of the distribution. Therefore, when the audio features are extracted as a data point in the features space and compared to the distribution of confirmed (i.e., non erroneous audio outputs) the rapid repetition of the sound effect will result in values of one or more audio features that significantly differ from those of the non-erroneous data points, resulting in the data point being inconsistent with those of the distribution. In this way the erroneous audio output, including an erroneous duplicated audio output, may be identified and flagged to a user.

Upon detecting an error, that is, detecting the sample audio output 100 to be inconsistent, an error alert may be output and/or the sample audio output 100 may be deleted from the gameplay, suppressed when it occurs in the gameplay, or updated in the gameplay to be consistent with the distribution of confirmed audio outputs. Updated, when used herein, may be understood to mean that the features f1, f2 and f3 of the sample audio output 100 are adjusted so that the data point representing it is a distance from a centroid of the clusters c1, c2, c3 and c4 that does not exceed the error threshold.

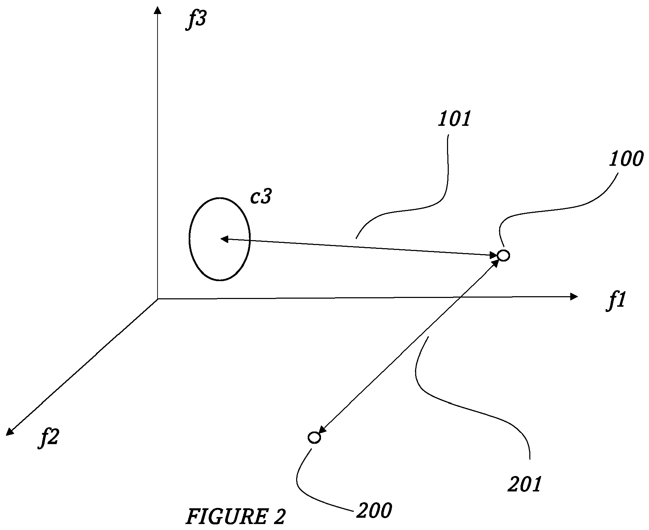

Referring to Figure 2, there is provided the audio output distribution with the features f1, f2 and f3, and comprising the cluster c3. There is also provided the sample audio output 100; the distance 101; a further sample audio output 200; and a further distance 201. For ease of viewing, the clusters c1, c2 and c3 have been omitted from Figure 2 but it will be understood that this is no way limiting.

Upon detecting that the sample audio output 100 is inconsistent (that is, its corresponding data point exceeds the error threshold when compared to the distribution of confirmed audio outputs represented in the cluster c3), a further sample audio output 200 that occurs during gameplay may be received. The further sample audio output 200 may then be compared to the inconsistent sample audio output 100 to determine a similarity metric. For example, a data point representing the corresponding further sample audio output 200 is calculated to be a distance 201 from the data point representing the corresponding inconsistent sample audio output 100, wherein the distance 201 is a Euclidian distance and is the similarity metric employed for this example. However, the invention is not limited thereto, and any separation-related metric and/or similarity metric described herein or known per se in the art may be employed in the alternative.

In an example of this embodiment, a machine learning model may be trained using the inconsistent sample audio output 100 to predict further sample audio to be in error, that is, to be inconsistent with the distribution of confirmed audio outputs represented by the cluster c3. In this example, the further sample audio output 200 is input to the trained machine learning model to detect an error in the further sample audio output 200 according to the methods described herein.

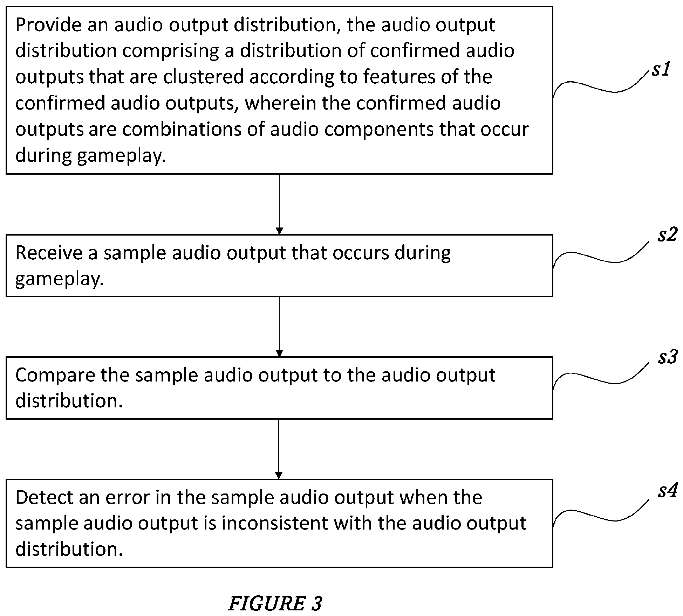

Referring to Figure 3, there is provided an exemplary method of performing the invention according to an embodiment. The method comprises four steps s1, s2, s3 and s4 in that order. However, the invention is not limited thereto, and the steps may be completed in any order according to this embodiment.

Step s1 comprises providing an audio output distribution, the audio output distribution comprising a distribution of confirmed audio outputs that are clustered according to features of the confirmed audio outputs, wherein the confirmed audio outputs are combinations of audio components that occur during gameplay. Step s2 comprises receiving a sample audio output that occurs during gameplay. Step s3 comprises comparing the sample audio output to the audio output distribution. Step s4 comprises detecting an error in the sample audio output when the sample audio output is inconsistent with the audio output distribution.

Once erroneous audio outputs are detected, they may be notified to a user in a number of ways to aid debugging and correcting of audio errors. In one example, a waveform of the audio output is displayed to a user, where parts of the waveform likely responsible for the determined error are highlighted. In order to determine the audio components within the erroneous audio output that contribute to the error (i.e., to the deviation of the audio output from the confirmed outputs in the feature space), analysis of the features of the erroneous audio output may be necessary to map these back to the parts of the original recording. In particular, the features of the erroneous audio output may be analysed to identify the audio components that contribute to those features that deviate most significantly from the average values of a cluster. The audio components can then be highlighted on the displayed waveform and, optionally, a list of the erroneous audio components may be output to assist the user in debugging.

In other examples a recording containing the erroneous audio output may be made and output to the user for aiding debugging. The recording could be of one or both of the audio and graphical outputs during a section of gameplay containing the error. In this way, the user can review the recordings to determine the error and take the necessary steps to correct the errors.

The methods described herein may be implemented by hardware, software, or any combinations thereof. Where a software implementation is employed to implement an embodiment of the invention or any feature therein, it will be appreciated that such software, and any non-transitory machine-readable storage media by which such software is provided, are also to be considered embodiments of the invention.

## Claims

1. A computer-implemented method of detecting errors in audio outputs occurring during gameplay on a video gaming system, the method comprising:
providing (s1) an audio output distribution, the audio output distribution comprising a distribution of confirmed audio outputs that are clustered by a clustering algorithm according to features of the confirmed audio outputs into one or more clusters, wherein each of the confirmed audio outputs is a combination of audio components that occur during gameplay;
receiving (s2) a sample audio output (100) that occurs during gameplay;
comparing (s3) the sample audio output to the audio output distribution; and
detecting (s4) an error in the sample audio output when the sample audio output is inconsistent with the audio output distribution, the sample audio output being inconsistent with the audio output distribution when the sample audio output does not conform with any cluster of the audio output distribution.

2. The method according to claim 1, wherein an audio output from among the audio outputs comprises a section of gameplay audio comprising a plurality of audio components, wherein the plurality of audio components comprises one or more of: a sound effect, music, and dialogue.

3. The method according to claim 1 or 2, wherein providing an audio output distribution comprises:
using an unsupervised or self-supervised clustering algorithm that learns features of the audio output to use to perform the clustering.

4. The method according to any preceding claim, wherein comparing the sample audio output to the audio output distribution comprises:
calculating a separation between the sample audio output and a cluster of the audio output distribution.

5. The method according to claim 4, wherein calculating the separation comprises computing a distance (101) between the sample audio output and a centre of the cluster in a feature space of the distribution.

6. The method according to claim 4 or 5, wherein detecting an error in the sample audio output comprises:
detecting the error when the separation between the sample audio output and the cluster exceeds an error threshold.

7. The method according to any preceding claim, the method further comprising: when an error is detected in the sample audio output,
displaying, on a display of the video gaming system, the waveform of the erroneous audio output with an erroneous portion of the waveform highlighted.

8. The method according to any preceding claim, the method further comprising, when an error is detected in the sample audio output, one or more of the following:
recording a section of gameplay audio comprising the erroneous audio output;
automatically deleting, suppressing, or updating the erroneous sample audio output;
outputting an error alert.

9. The method according to any preceding claim, the method further comprising: after an error is detected in the sample audio output,
receiving a further sample audio output (200) that occurs during gameplay;
comparing the further sample audio output to the erroneous sample audio output to determine a similarity metric; and
detecting an error in the further sample audio output when the similarity metric is above a similarity metric threshold.

10. The method according to any preceding claim, the method further comprising: receiving a user request during gameplay, the user request indicating that the sample audio output is in error,
receiving a further sample audio output (200) that occurs during gameplay;
comparing the further sample audio output to the erroneous sample audio output to determine a similarity metric; and
detecting an error in the further sample audio output when the similarity metric is above a similarity metric threshold.

11. The method according to any preceding claim, the method further comprising:
repeating the method of claim 1 to obtain a plurality of erroneous sample audio outputs;
training a machine learning model using the plurality of erroneous sample audio outputs to predict whether a sample audio output is an erroneous audio output;
receiving a further sample audio output (200); and
inputting the further sample audio output into the trained machine learning model to detect an error in the further sample audio output.

12. The method according to any preceding claim, wherein an error is detected when the sample audio output comprises an erroneous repetition of audio components.

13. A system for detecting errors in audio outputs occurring during gameplay, wherein the system comprises a processing unit configured to perform the method of any preceding claim.

14. A computer program comprising instructions that, when executed, cause a computer to perform the method of any of claims 1 to 12.

## Patentansprüche

1. Computerimplementiertes Verfahren zum Detektieren von Fehlern in Audioausgaben, die während eines Spielverlaufs auf einem Videospielsystem auftreten, das Verfahren umfassend:
Bereitstellen (s1) einer Audioausgabeverteilung, die Audioausgabeverteilung umfassend eine Verteilung von bestätigten Audioausgaben, die durch einen Clustering-Algorithmus gemäß Merkmalen der bestätigten Audioausgaben in einen oder mehrere Cluster geclustert sind, wobei jede der bestätigten Audioausgaben eine Kombination von Audiokomponenten ist, die während des Spielverlaufs auftreten;
Empfangen (s2) einer Beispielaudioausgabe (100), die während des Spielverlaufs auftritt;
Vergleichen (s3) der Beispielaudioausgabe mit der Audioausgabeverteilung; und
Detektieren (s4) eines Fehlers in der Beispielaudioausgabe, wenn die Beispielaudioausgabe mit der Audioausgabeverteilung unvereinbar ist, wobei die Beispielaudioausgabe mit der Audioausgabeverteilung unvereinbar ist, wenn die Beispielaudioausgabe mit keinem Cluster der Audioausgabeverteilung übereinstimmt.

2. Verfahren nach Anspruch 1, wobei eine Audioausgabe unter den Audioausgaben einen Bereich eines Spielverlaufsaudios umfasst, umfassend eine Vielzahl von Audiokomponenten, wobei die Vielzahl von Audiokomponenten eines oder mehrere umfasst von: einem Sound-Effekt, Musik und Dialog.

3. Verfahren nach Anspruch 1 oder 2, wobei das Bereitstellen einer Audioausgabeverteilung umfasst:
Verwenden eines unüberwachten oder selbstüberwachten Clustering-Algorithmus, der Merkmale der Audioausgabe lernt, um diese zu verwenden, um das Clustern durchzuführen.

4. Verfahren nach einem der vorstehenden Ansprüche, wobei das Vergleichen der Beispielaudioausgabe mit der Audioausgabeverteilung umfasst:
Kalkulieren einer Trennung zwischen der Beispielaudioausgabe und einem Cluster der Audioausgabeverteilung.

5. Verfahren nach Anspruch 4, wobei das Kalkulieren der Trennung ein Berechnen eines Abstands (101) zwischen der Beispielaudioausgabe und einem Zentrum des Clusters in einem Merkmalsraum der Verteilung umfasst.

6. Verfahren nach Anspruch 4 oder 5, wobei das Detektieren eines Fehlers in der Beispielaudioausgabe umfasst:
Detektieren des Fehlers, wenn die Trennung zwischen der Beispielaudioausgabe und dem Cluster eine Fehlerschwelle überschreitet.

7. Verfahren nach einem der vorstehenden Ansprüche, das Verfahren ferner umfassend:
wenn ein Fehler in der Beispielaudioausgabe detektiert wird,
Anzeigen, auf einer Anzeige des Videospielsystems, der Wellenform der fehlerhaften Audioausgabe mit einem hervorgehobenen fehlerhaften Abschnitt der Wellenform.

8. Verfahren nach einem der vorstehenden Ansprüche, das Verfahren ferner umfassend, wenn ein Fehler in der Beispielaudioausgabe detektiert wird, eines oder mehrere der folgenden:
Aufzeichnen eines Bereichs des Spielverlaufsaudios, umfassend die fehlerhafte Audioausgabe;
automatisches Löschen, Unterdrücken oder Aktualisieren der fehlerhaften Beispielaudioausgabe;
Ausgeben einer Fehlermeldung.

9. Verfahren nach einem der vorstehenden Ansprüche, das Verfahren ferner umfassend:
nachdem ein Fehler in der Beispielaudioausgabe detektiert wird,
Empfangen einer weiteren Beispielaudioausgabe (200), die während des Spielverlaufs auftritt;
Vergleichen der weiteren Beispielaudioausgabe mit der fehlerhaften Beispielaudioausgabe, um eine Ähnlichkeitsmetrik zu bestimmen; und
Detektieren eines Fehlers in der weiteren Beispielaudioausgabe, wenn die Ähnlichkeitsmetrik über einer Ähnlichkeitsmetrikschwelle liegt.

10. Verfahren nach einem der vorstehenden Ansprüche, das Verfahren ferner umfassend:
Empfangen einer Benutzeranfrage während des Spielablaufs, wobei die Benutzeranfrage angibt, dass die Beispielaudioausgabe fehlerbehaftet ist,
Empfangen einer weiteren Beispielaudioausgabe (200), die während des Spielverlaufs auftritt;
Vergleichen der weiteren Beispielaudioausgabe mit der fehlerhaften Beispielaudioausgabe, um eine Ähnlichkeitsmetrik zu bestimmen; und
Detektieren eines Fehlers in der weiteren Beispielaudioausgabe, wenn die Ähnlichkeitsmetrik über einer Ähnlichkeitsmetrikschwelle liegt.

11. Verfahren nach einem der vorstehenden Ansprüche, das Verfahren ferner umfassend:
Wiederholen des Verfahrens nach Anspruch 1, um eine Vielzahl von fehlerhaften Beispielaudioausgaben zu erhalten;
Trainieren eines maschinellen Lernmodells unter Verwendung der Vielzahl von fehlerhaften Beispielaudioausgaben, um vorherzusagen, ob eine Beispielaudioausgabe eine fehlerhafte Audioausgabe ist;
Empfangen einer weiteren Beispielaudioausgabe (200); und
Eingeben der weiteren Beispielaudioausgabe in das trainierte maschinelle Lernmodell, um einen Fehler in der weiteren Beispielaudioausgabe zu detektieren.

12. Verfahren nach einem der vorstehenden Ansprüche, wobei ein Fehler detektiert wird, wenn die Beispielaudioausgabe eine fehlerhafte Wiederholung von Audiokomponenten umfasst.

13. System zum Detektieren von Fehlern in Audioausgaben, die während des Spielverlaufs auftreten, wobei das System eine Verarbeitungseinheit umfasst, die konfiguriert ist, um das Verfahren nach einem der vorstehenden Ansprüche durchzuführen.

14. Computerprogramm, umfassend Anweisungen, die, wenn sie ausgeführt werden, einen Computer veranlassen, das Verfahren nach einem der Ansprüche 1 bis 12 durchzuführen.

## Revendications

1. Procédé implémenté par ordinateur de détection d'erreurs dans des sorties audio se produisant pendant une partie de jeu sur un système de jeu vidéo, le procédé comprenant :
la fourniture (s1) d'une distribution de sorties audio, la distribution de sorties audio comprenant une distribution de sorties audio confirmées qui sont regroupées par un algorithme de regroupement selon des caractéristiques des sorties audio confirmées dans un ou plusieurs regroupements, dans lequel chacune des sorties audio confirmées est une combinaison de composantes audio qui se produisent pendant une partie de jeu ;
la réception (s2) d'une sortie audio échantillon (100) qui se produit pendant une partie de jeu ;
la comparaison (s3) de la sortie audio échantillon à la distribution de sorties audio ; et
la détection (s4) d'une erreur dans la sortie audio échantillon lorsque la sortie audio échantillon est incompatible avec la distribution de sorties audio, la sortie audio échantillon étant incompatible avec la distribution de sorties audio lorsque la sortie audio échantillon n'est conforme à aucun regroupement de la distribution de sorties audio.

2. Procédé selon la revendication 1, dans lequel une sortie audio parmi les sorties audio comprend une section d'audio de partie de jeu comprenant une pluralité de composantes audio, dans lequel la pluralité de composantes audio comprend un ou plusieurs parmi : un effet sonore, de la musique et un dialogue.

3. Procédé selon la revendication 1 ou 2, dans lequel la fourniture d'une distribution de sorties audio comprend :
l'utilisation d'un algorithme de regroupement non supervisé ou auto-supervisé qui apprend des caractéristiques de la sortie audio à utiliser pour mettre en oeuvre le regroupement.

4. Procédé selon l'une quelconque revendication précédente, dans lequel la comparaison de la sortie audio échantillon à la distribution de sorties audio comprend :
le calcul d'une séparation entre la sortie audio échantillon et un regroupement de la distribution de sorties audio.

5. Procédé selon la revendication 4, dans lequel le calcul de la séparation comprend le calcul informatique d'une distance (101) entre la sortie audio échantillon et un centre du regroupement dans un espace de caractéristiques de la distribution.

6. Procédé selon la revendication 4 ou 5, dans lequel la détection d'une erreur dans la sortie audio échantillon comprend :
la détection de l'erreur lorsque la séparation entre la sortie audio échantillon et le regroupement dépasse un seuil d'erreur.

7. Procédé selon l'une quelconque revendication précédente, le procédé comprenant en outre :
lorsqu'une erreur est détectée dans la sortie audio échantillon,
le fait d'afficher, sur un affichage du système de jeu vidéo, la forme d'onde de la sortie audio erronée avec une partie erronée de la forme d'onde mise en évidence.

8. Procédé selon l'une quelconque revendication précédente, le procédé comprenant en outre, lorsqu'une erreur est détectée dans la sortie audio échantillon, un ou plusieurs de ce qui suit :
l'enregistrement d'une section d'audio de partie de jeu comprenant la sortie audio erronée ;
automatiquement, l'effacement, la suppression ou la mise à jour, de la sortie audio échantillon erronée ;
la sortie d'une alerte d'erreur.

9. Procédé selon l'une quelconque revendication précédente, le procédé comprenant en outre :
après qu'une erreur a été détectée dans la sortie audio échantillon,
la réception d'une sortie audio échantillon supplémentaire (200) qui se produit pendant une partie de jeu ;
la comparaison de la sortie audio échantillon supplémentaire à la sortie audio échantillon erronée pour déterminer une métrique de similarité ; et
la détection d'une erreur dans la sortie audio échantillon supplémentaire lorsque la métrique de similarité est supérieure à un seuil de métrique de similarité.

10. Procédé selon l'une quelconque revendication précédente, le procédé comprenant en outre :
la réception d'une demande d'utilisateur pendant une partie de jeu, la demande d'utilisateur indiquant que la sortie audio échantillon est en erreur,
la réception d'une sortie audio échantillon supplémentaire (200) qui se produit pendant une partie de jeu ;
la comparaison de la sortie audio échantillon supplémentaire à la sortie audio échantillon erronée pour déterminer une métrique de similarité ; et
la détection d'une erreur dans la sortie audio échantillon supplémentaire lorsque la métrique de similarité est supérieure à un seuil de métrique de similarité.

11. Procédé selon l'une quelconque revendication précédente, le procédé comprenant en outre :
la répétition du procédé selon la revendication 1 pour obtenir une pluralité de sorties audio échantillons erronées ;
l'entraînement d'un modèle d'apprentissage automatique à l'aide de la pluralité de sorties audio échantillons erronées pour prédire si une sortie audio échantillon est une sortie audio erronée ;
la réception d'une sortie audio échantillon supplémentaire (200) ; et
l'entrée de la sortie audio échantillon supplémentaire dans le modèle d'apprentissage automatique entraîné pour détecter une erreur dans la sortie audio échantillon supplémentaire.

12. Procédé selon l'une quelconque revendication précédente, dans lequel une erreur est détectée lorsque la sortie audio échantillon comprend une répétition erronée de composantes audio.

13. Système permettant de détecter des erreurs dans des sorties audio se produisant pendant une partie de jeu, dans lequel le système comprend une unité de traitement configurée pour mettre en œuvre le procédé selon l'une quelconque revendication précédente.

14. Programme d'ordinateur comprenant des instructions qui, lorsqu'elles sont exécutées, amènent un ordinateur à mettre en œuvre le procédé selon l'une quelconque des revendications 1 à 12.
